# EUROPEAN PATENT SPECIFICATION

(11) **EP 1 129 144 B1**
(45) Date of publication and mention of the grant of the patent: **28.06.2006**
(21) Application number: 99949227.5
(22) Date of filing: 14.10.1999
(51) Int. Cl.: C09D 5/03, C09D 5/08

(54) **POWDER COATING COMPOSITIONS**
PULVERLACKZUSAMMENSETZUNGEN
COMPOSITIONS DE REVETEMENTS EN POUDRE

(30) Priority: 15.10.1998 GB 9822523
(43) Date of publication of application: 05.09.2001
(73) Proprietor: International Coatings Limited, London W2 2ZB (GB)
(72) Inventor: ROBINSON, Janice Greta, Gatesh ead Tyne & Wear NE11 9TQ (GB); SAVAGE, Martin Joseph, Ben ton Newcastle upon Tyne NE12 8LA (GB)
(74) Representative: Schalkwijk, Pieter Cornelis
(86) International application number: PCT/GB1999/003404
(87) International publication number: WO 2000/022054

(56) References cited:
- EP-A- 0 360 422
- EP-A- 0 433 533
- EP-A- 0 486 476
- DD-A- 200 527
- GB-A- 2 302 092
- US-A- 5 015 671
- US-B1- 7 410 404

## Description

This invention relates to powder coating compositions, and in particular to corrosion-resistant powder coating compositions for use in providing corrosion protection for metal substrates, especially aluminium or alloys thereof.

Powder coatings form a rapidly growing sector of the coatings market. Powder coatings are solid compositions which are generally applied by an electrostatic spray process in which the powder coating particles are electrostatically charged by the spray gun and the substrate is earthed. Charging of the powder in the spray gun is effected by means of an applied voltage or by the use of friction (tribo-charging). Conversion of the adherent particles into a continuous coating (including, where appropriate, curing of the applied composition) may be effected by heat treatment and/or by radiant energy, notably infra-red, ultra-violet or electron beam radiation. The powder coating particles which do not adhere to the substrate can be recovered for re-use so that powder coatings are economical in use of ingredients. Also, powder coating compositions are generally free of added solvents, and, in particular, do not use organic solvents and are accordingly non-polluting.

Powder coating compositions generally comprise a solid film-forming resin binder, usually with one or more colouring agents such as pigments, and optionally also contain one or more performance additives. They are usually thermosetting, incorporating, for example, a film-forming polymer and a corresponding curing agent (which may itself be another film-forming polymer), but thermoplastic systems (based, for example, on polyamides) can in principle be used instead. Powder coating compositions are generally prepared by intimately mixing the ingredients (including colouring agents and performance additives) for example in an extruder, at a temperature above the softening point of the film-forming polymer(s) but below a temperature at which significant pre-reaction would occur. The extrudate is usually rolled into a flat sheet and comminuted, for example by grinding, to the desired particle size. Other homogenisation processes also come into consideration, including non-extruder-based processes such as, for example, processes involving mixing using supercritical fluids, especially carbon dioxide.

By acting as an effective barrier, a single-coat powder coating can generally provide good resistance to corrosion whilst the coating remains intact. Corrosion will ensue, however, if the integrity of the coating film is lost or compromised so as to expose metal substrate.

Some degree of corrosion resistance can be imparted to powder coating films by the use of chromate anti-corrosive pigments, especially strontium chromate, but chromates present health hazards and their use is increasingly less favoured.

In the case of iron and steel substrates, proposals have been made for affording electrochemical (cathodic) protection against corrosion by using powder coating compositions having a very high zinc content (typically from 40 to 90% by weight). At the resulting high pigment volume concentrations, however, the applied coatings are very dense and relatively porous, and normally require a topcoat of another powder coating or other finish. Also, the zinc-rich powders are suitable only for use on iron and steel substrates.

An example of such prior art is EP-A-0 525 870, which discloses a powder coating composition which comprises a resin, a curing agent and zinc, the zinc being a mixture of lamellar zinc and zinc dust and the total zinc content being 20 to 70% by weight. A topcoat is applied over the initial zinc-containing coating.

US 4,710,404, describes a powder coating composition which contains an anti-corrosive agent consisting essentially of magnesium oxide and zinc oxide in an amount of preferably 10-50 wt.%. The powder coating composition may contain fillers, exemplified by "talc, silica, barium sulfate, calcium sulfate, calcium carbonate, calcium silicate, titanium dioxide, iron oxides, mica, aluminum silicate, clay, and mixtures thereof" in an amount of 1-74 wt.%, preferably 15-35 wt.%.

GB 2 302 092A proposes a powder coating composition which comprises, in addition to the usual organic film-forming binder, a corrosion inhibitor comprising a sulphur-containing organic compound having fused aromatic and heterocydic rings and a calcium-modified silica pigment such as those obtainable under the trade name SHIELDEX (Grace) which are based on calcium ion-exchanged amorphous silica gel.

As reported in GB 2 302 092A, the calcium-modified silica pigments, if used as sole corrosion inhibitor (that is, without the organic component) have been found to provide little or no anti-corrosion protection in powder coating systems.

In this connection, it will be appreciated that the environment of a pigmentary material in a powder coating film is very different from that in a dried paint film derived from a wet paint system. In particular, a powder coating film will in general be less porous than the dried film from a liquid paint. Pigment particles will therefore be closely encapsulated by the film-forming binder, and that will in turn tend to restrict the extent to which the pigment particles can act as active anti-corrosion pigments and leach from the film to protect an exposed area of the metal substrate. This factor will be particularly evident in the case of highly cross-linked films such as are formed from epoxy-based low-bake compositions, such as those specially formulated for aerospace applications. Attempts to counteract that effect by using high ratios of pigment to binder tend to be unsatisfactory because the resulting paint film will not normally be aesthetically acceptable as a finish, and a topcoat will in general be required. Multiple coats of powder coatings, however, will often exceed maximum film weight tolerances, especially in critical applications such as aerospace finishes, and may also be undesirable for other reasons.

It is an object of the present invention to provide powder coating compositions which can afford good corrosion-resistance, especially against filiform corrosion but also against rusting and blistering, without the use of chromate anti-corrosion pigments, and in which effective corrosion resistance is achievable even at high cross-linking densities.

A further object of the invention is to provide such compositions which can provide aesthetically satisfactory results with a single coat, without the need for a top finishing coat.

The invention provides a powder coating composition which comprises a film-forming polymer and a corrosion-inhibiting additive which comprises at least one silicate material selected from the group consisting of:
(a) materials obtainable by reaction of silica or a silicate with a compound of a trivalent metal; and
(b) naturally occurring or synthetic metal silicates, and an oxide selected from zinc oxide, magnesium oxide, or silica, preferably zinc oxide, which may be incorporated in an amount in the range of from 2 to 30% by weight, based on the total weight of the corrosion-inhibiting additive, advantageously at least 5%, 10% or 15% by weight, more especially not exceeding 20% or 25% by weight, wherein the proportion of corrosion-inhibiting additive(s) incorporated before and/or during homogenisation of the composition is up to 15% by weight, based on the total weight of the composition, and wherein the proportion of corrosion-inhibiting additive(s) incorporated by post-blending is no more than 7.5% by weight, based on the total weight of the composition. Particular mention may be made of combinations of aluminium silicate materials (possibly in conjunction with an aluminium phosphate) and zinc oxide and/or silica, preferably amorphous silica.

The preferred trivalent metal in embodiment (a) is chromium, iron or aluminium, especially aluminium. Embodiment (b) advantageously uses a silicate of a trivalent metal, and the same preferences apply.

The compound of the trivalent metal may, for example, be a phosphate (preferably a mono- or di-hydrogen phosphate), a fluoride, silicofluoride, chloride, sulphate or alkane carboxylate. Aluminium phosphates or sulphate are preferred. As particular examples for embodiment (a), mention may be made of sodium silicate and aluminium phosphate and of sodium silicate and aluminium sulphate.

The silica in embodiment (a) is advantageously amorphous silica or a precursor thereof.

Examples of naturally occurring metal silicates for use in embodiment (b) are china clay and bentonite.

As an indication of the relative proportions of silica and trivalent metal compound in embodiment (a), the ratio of silicon to trivalent metal atom may be, for example, 0.2 to 30 : 1, advantageously at least 0.5 : 1, 1.5 : 1, 2.5 : 1 or 3.5 : 1, preferably not exceeding 20 : 1, 15 : 1 or 10 : 1. In general, the same silicon: metal ratios are also applicable to embodiment (b), especially in the case where the metal silicate is a silicate of a trivalent metal.

The term "silica" as used herein includes materials obtained by pyrogenic and, preferably, wet processes leading to precipitated silicas or silica gels, as well as, in principle, mixed metal-silicon oxides and naturally-occurring materials such as, for example, diatomaceous earth. Silicas for use according to the invention will in general have an amorphous structure. The term "silica" includes silicic acid materials and other precursor materials. Colloidal silica and fumed silica may be mentioned as examples of suitable silica materials.

The silicate corrosion-inhibiting additive, or a silica or silicate used in embodiment (a), may be surface-modified by ion exchange. Examples of cations which may be incorporated at the surface of the silicate material by ion exchange include calcium, zinc, cobalt, lead, strontium, lithium, barium and magnesium, especially calcium.

According to a modification of the invention, the corrosion-inhibiting additive comprises, or is derived from, silica or alumina which has been surface-modified by ion exchange as described above, in combination with zinc oxide. Further information concerning such surface-modified materials may be found in US 4 687 595 and EP 0 046 057A.

Suitable corrosion-inhibiting additive materials include the non-toxic anti-corrosive pigments which are obtainable under the trade name ALBRITECT (Albright & Wilson), especially the CC 300 and CC 500 materials. ALBRITECT CC 300 is a blend of an insoluble aluminium silicate with an amorphous silica. ALBRITECT CC 500 is a blend of an aluminium silicate with zinc oxide. Further information concerning additive materials which may be used may be found in EP O 273 698A, EP 0 360 422A, and EP 0 486 476A. Thus, EP 0 360 422A relates to anti-corrosive compositions comprising zinc oxide with a reaction product of an acidic trivalent metal compound and a silicate, or zinc oxide with an aluminium silicate material.

EP 0 486 476A relates to anti-corrosive materials made by reaction of a trivalent metal compound and silica of fine particle size or a precursor thereof or a silicate. EP 0 273 698A contains similar disclosure.

Corrosion-inhibiting additives used according to the invention are advantageously incorporated by intimate mixing with the other constituent(s) of the composition (excluding post-blended additives) before the extrusion or other homogenisation process and/or may be incorporated during the process. Additionally or alternatively, the additive(s) of the invention may be incorporated in the powder coating composition by any available post-blending method. Thus, for example, the corrosion-inhibiting additive(s) may be incorporated by a dry-blending method, for instance:
(i) injection at the mill, with the chip and additive(s) fed into the mill simultaneously;
(ii) introduction at the stage of sieving after milling; and
(iii) post-production blending in a "tumbler" or other suitable mixing device.

The individual components of a corrosion-inhibiting additive used according to the invention may be incorporated separately or pre-mixed prior to incorporation (whether pre-, during or post-extrusion or other homogenisation process), or, in the case of embodiment (a), the components will in general be pre-reacted before incorporation. By way of example, such pre-reaction may be carried out in aqueous solution or dispersion, suitably under acid conditions generated, for example, by incorporation of phosphoric acid, and the resulting precipitate may be washed and thereafter dried at elevated temperature (for example, 100° to 350°C.). The product may contain residual soluble anions depending on the washing process. In another process, the corrosion-inhibiting additive may be formed by drying an aqueous dispersion of silica in a solution of a water-soluble salt of the trivalent metal. As a further possibility, the additive may be formed by intimate admixture of the trivalent metal compound and silica, followed by heating to at least 100°C or at least 150°C.

In principle, a proportion or component of the corrosion-inhibiting additive may be incorporated pre- and/or during the homogenisation process, with the remaining proportion or component being incorporated post-homogenisation ("post-blending").

The proportion of corrosion-inhibiting additive(s) incorporated in a powder coating composition of the invention pre- or during homogenisation may in general be in the range of from 0.5 to 15% by weight, based on the total weight of the composition, for example at least 1%, 5% or 10% by weight. Ranges which may be mentioned include from 5 to 15% by weight, advantageously from 8 to 12% by weight. The proportion of additive incorporated by post-blending will in general be significantly less, for example, no more than 5% by weight, although higher proportions (say, up to 7.5% by weight) may be used in some cases.

The particle size of the or each corrosion-inhibiting additive or component thereof may in general be up to 25 microns, and is preferably no more than 10 microns, especially in the case of thin-film applications. The preferred minimum particle size is 0.1 microns and a range of 2.5 to 7.5 microns may be mentioned as suitable.

The particle size of any zinc oxide included in the corrosion-inhibiting additive is advantageously in the range of from 0.1 to 10 microns.

The particle size distribution of the powder coating composition may be in the range of from 0 to 120 microns with a mean particle size in the range of from 15 to 75 microns; preferably at least 20 or 25 microns, advantageously not exceeding 50 microns, more especially 20 to 45 microns.

In the case of relatively fine size distributions, especially where relatively thin applied films are required, for example, the powder coating composition may be one in which one or more of the following criteria is satisfied:
a) 95-100% by volume < 50 µm
b) 90-100% by volume < 40 µm
c) 45-100% by volume < 20 µm
d) 5-100% by volume < 10 µm preferably 10-70% by volume < 10 µm
e) 1-80% by volume < 5 µm preferably 3-40% by volume < 5 µm
f) d(v)₅₀ in the range 1.3-32 µm preferably 8-24 µm

A powder coating composition according to the invention may contain a single film-forming powder component comprising one or more film-forming resins or may comprise a mixture of two or more such components.

The film-forming resin (polymer) acts as a binder, having the capability of wetting pigments and providing cohesive strength between pigment particles and of wetting or binding to the substrate, and melts and flows in the curing/stoving process after application to the substrate to form a homogeneous film.

The or each powder coating component of a composition of the invention will in general be a thermosetting system, although thermoplastic systems (based, for example, on polyamides) can in principle be used instead.

When a thermosetting resin is used, the solid polymeric binder system generally includes a solid curing agent for the thermosetting resin; alternatively two co-reactive film-forming thermosetting resins may be used.

The film-forming polymer used in the manufacture of the or each component of a thermosetting powder coating composition according to the invention may be one or more selected from carboxy-functional polyester resins, hydroxy-functional polyester resins, epoxy resins, and functional acrylic resins.

A powder coating component of the composition can, for example, be based on a solid polymeric binder system comprising a carboxy-functional polyester film-forming resin used with a polyepoxide curing agent. Such carboxy-functional polyester systems are currently the most widely used powder coatings materials. The polyester generally has an acid value in the range 10-100, a number average molecular weight Mn of 1,500 to 10,000 and a glass transition temperature Tg of from 30°C to 85°C, preferably at least 40°C. The poly-epoxide can, for example, be a low molecular weight epoxy compound such as triglycidyl isocyanurate (TGIC), a compound such as diglycidyl terephthalate condensed glycidyl ether of bisphenol A or a light-stable epoxy resin. Such a carboxy-functional polyester film-forming resin can alternatively be used with a bis(beta-hydroxyalkylamide) curing agent such as tetrakis(2-hydroxyethyl) adipamide.

Alternatively, a hydroxy-functional polyester can be used with a blocked isocyanate-functional curing agent or an amine-formaidehyde condensate such as, for example, a melamine resin, a urea-formaldehye resin, or a glycol ural formaldehye resin, for example the material "Powderlink 1174" supplied by the Cyanamid Company, or hexahydroxymethyl melamine. A blocked isocyanate curing agent for a hydroxy-functional polyester may, for example, be intemally blocked, such as the uretdione type, or may be of the caprolactam-blocked type, for example isophorone diisocyanate.

As a further possibility, an epoxy resin can be used with an amine-functional curing agent such as, for example, dicyandiamide. Instead of an amine-functional curing agent for an epoxy resin, a phenolic material may be used, preferably a material formed by reaction of epichlorohydrin with an excess of bisphenol A (that is to say, a polyphenol made by adducting bisphenol A and an epoxy resin). A functional acrylic resin, for example a carboxy-, hydroxy- or epoxy-functional resin can be used with an appropriate curing agent.

Mixtures of film-forming polymers can be used, for example a carboxy-functional polyester can be used with a carboxy-functional acrylic resin and a curing agent such as a bis(beta-hydroxyalkylamide) which serves to cure both polymers. As further possibilities, for mixed binder systems, a carboxy-, hydroxy- or epoxy-functional acrylic resin may be used with an epoxy resin or a polyester resin (carboxy- or hydroxy-functional). Such resin combinations may be selected so as to be co-curing, for example a carboxy-functional acrylic resin co-cured with an epoxy resin, or a carboxy-functional polyester co-cured with a glycidyl-functional acrylic resin. More usually, however, such mixed binder systems are formulated so as to be cured with a single curing agent (for example, use of a blocked isocyanate to cure a hydroxy-functional acrylic resin and a hydroxy-functional polyester). Another preferred formulation involves the use of a different curing agent for each binder of a mixture of two polymeric binders (for example, an amine-cured epoxy resin used in conjunction with a blocked isocyanate-cured hydroxy-functional acrylic resin).

Other film-forming polymers which may be mentioned include functional fluoropolymers, functional fluorochloropolymers and functional fluoroacrylic polymers, each of which may be hydroxy-functional or carboxy-functional, and may be used as the sole film-forming polymer or in conjunction with one or more functional acrylic, polyester and/or epoxy resins, with appropriate curing agents for the functional polymers.

Other curing agents which may be mentioned include epoxy phenol novolacs and epoxy cresol novolacs; isocyanate curing agents blocked with oximes, such as isophorone diisocyanate blocked with methyl ethyl ketoxime, tetramethylene xylene diisocyanate blocked with acetone oxime, and Desmodur W (dicyclohexylmethane diisocyanate curing agent) blocked with methyl ethyl ketoxime; light-stable epoxy resins such as "Santolink LSE 120" supplied by Monsanto; and alicyclic poly-epoxides such as "EHPE-3150" supplied by Daicel.

Certain alloys, especially certain aluminium alloys (including alloys used in aerospace applications) undergo metallurgical changes at temperatures of the order of 150°C and above. Accordingly, an important embodiment of the invention comprises so-called "low-bake" compositions formulated so as to be convertible into continuous coating form (with curing as appropriate), at temperatures not exceeding 150°C, advantageously not exceeding 140°C and preferably not exceeding 130°C. Low-bake compositions of this kind have already been proposed, and can provide coatings with good barrier and adhesion properties, but the present invention offers the possibility of achieving improved corrosion-resistance in coatings formed from such compositions.

A powder coating composition for use according to the invention may be free from added colouring agents, but usually contains one or more such agents (pigments or dyes). Examples of pigments which can be used are inorganic pigments such as titanium dioxide, red and yellow iron oxides, chrome pigments and carbon black and organic pigments such as, for example, phthalocyanine, azo, anthraquinone, thioindigo, isodibenzanthrone, triphendioxane and quinacridone pigments, vat dye pigments and lakes of acid, basic and mordant dyestuffs. Dyes can be used instead of or as well as pigments.

The composition of the invention may also indude one or more extenders or fillers, which may be used inter alia to assist opacity, whilst minimising costs, or more generally as a diluent.

The following ranges should be mentioned for the total pigment/filler/ extender content of a powder coating composition according to the invention (disregarding post-blend additives):
0% to 55% by weight,
0% to 50% by weight,
10% to 50% by weight,
0% to 45% by weight, and
25% to 45% by weight

Of the total pigment/filler/extender content, a pigment content of ≤ 40% by weight of the total composition (disregarding post-blend additives) may be used. Usually a pigment content of 25-30% is used, although in the case of dark colours opacity can be obtained with < 10% by weight of pigment.

The composition of the invention may also include one or more performance additives, for example, a flow-promoting agent, a plasticiser, a stabiliser against UV degradation, or an anti-gassing agent, such as benzoin, or two or more such additives may be used. The following ranges should be mentioned for the total performance additive content of a powder coating composition according to the invention (disregarding post-blend additives):
0% to 5% by weight,
0% to 3% by weight, and
1% to 2% by weight.

In general, colouring agents, fillers/extenders and performance additives as described above will not be incorporated by post-blending, but will be incorporated before and/or during the extrusion or other homogenisation process.

A powder coating composition according to the invention may in principle be applied to a substrate by any of the processes of powder coating technology, for example, by electrostatic spray coating (corona-charging or tribo-charging); or by fluidised-bed or electrostatic fluidised-bed processes.

After application of the powder coating composition to a substrate, conversion of the resulting adherent particles into a continuous coating (including, where appropriate, curing of the applied composition) may be effected by heat treatment and/or by radiant energy, notably infra-red, ultra-violet or electron beam radiation.

The invention is applicable over a wide range of applied film thicknesses, typically from thin films of, for example, 30 microns or less up to films of 50, 100, 150 or 200 microns. A typical minimum film thickness is 5 microns, and ranges of 15 to 25 microns and 15 to 40 microns are important, especially for aerospace applications.

A powder coating composition of the invention may incorporate, by dry-blending, one or more fluidity-assisting additives, for example, those disclosed in WO 94/11446, and especially the preferred additive combination disclosed in that Specification, comprising aluminium oxide and aluminium hydroxide, typically in proportions in the range of from 1 : 99 to 99 : 1 by weight, advantageously from 10 : 90 to 90 :10, preferably from 30 : 70 to 70 : 30, for example, from 45 : 55 to 55 : 45. The use of such additive combinations is especially applicable in the case of relatively fine size distributions as described above, where relatively thin applied films are required. Other dry-blended additives which may be mentioned include aluminium oxide and silica (which may be a wax-coated silica) either singly or in combination with each other or in other additive combinations, for example, including aluminium hydroxide.

A preferred combination comprises wax-coated silica, aluminium oxide and aluminium hydroxide. In the case of additives comprising or consisting of aluminium oxide and/or aluminium hydroxide, preference may be given to γ-structural types.

The amount of fluidity-assisting additive(s) incorporated by dry blending may be in the range of from, for example, 0.05 or 0.1 to 5% by weight, based on the total weight of the composition without the additive(s), advantageously from 0.1 to 3% by weight, more especially 0.1 to 2% by weight, preferably at least 0.2% by weight, especially from 0.2 to 1.5% by weight, more especially 0.3 to 1% by weight.

The total content of non-film-forming additive(s) of all kinds incorporated by post-blending will in general be no more than 10% by weight, based on the total weight of the composition without the additive(s).

An especially important embodiment of the invention comprises the application of a composition according to the invention to an aluminium substrate, but the substrate may instead comprise, for example, iron, tin or zinc. Alternatively, the substrate may comprise alloys of one or more of aluminium, iron, tin or zinc with themselves or with other metals such as, for example, copper, nickel and/or magnesium. The metal or alloy may be in the form of a layer on a substrate formed of another material, which may itself be another metal or alloy. The substrate may, for instance, be an aerospace component or an architectural extrusion.

Advantageously, the substrate is chemically or mechanically cleaned prior to application of the powder coating composition. Also, the substrate is preferably subjected to anodisation and/or chemical treatment, for example by means of a chromate-based conversion coating or chromic acid pickling. Other possible chemical pre-treatments include treatment with iron sulphate or zinc phosphate.

In a typical composition according to the invention, the proportion of film-forming polymer (and curing agent where appropriate) may be in the range of from 25 to 99.5% by weight, preferably from 40 to 98% by weight, with a proportion in the range of from 40 to 98% by weight, preferably from 50 to 90 or 95% by weight, being representative of compositions including colouring agents.

The following Examples illustrate the invention:-

### Example 1

Two low-bake, dicyandiamide-cured grey epoxy powder coating compositions A and B were prepared with ingredients as follows (parts by weight):

| | A | B |
|---|---|---|
| Rutile titanium dioxide | 20.41 | 20.41 |
| Pigment yellow 119 | 0.012 | 0.012 |
| Heucosin Fast blue | 0.484 | 0.484 |
| Lamp black 101 | 0.144 | 0.144 |
| Micronized dolomite | 6.32 | 6.32 |
| Barytes | 8.42 | 8.42 |
| Benzoin | 0.22 | 0.22 |
| Araldite epoxy resin | 60.16 | 50.60 |
| Epikure curing agent | 3.15 | 2.65 |
| Acrylic flow agent | 0.68 | 0.68 |
| Albritect CC500 | ----- | 10.00 |

Powder coating composition B is in accordance with the invention and incorporates 10% by weight of Albritect CC 500 (Albright & Wilson, a blend of an insoluble aluminium silicate with zinc oxide). Composition A, which is essentially similar but without the Albritect CC 500, is included in order to provide a basis for comparison.

In each case, the ingredients for the composition were dry-mixed in a blender, and fed into a twin-screw extruder operating at a temperature of 90°C. The extrudate was rolled flat on a chilled plate and broken into chip form (ca. 1 cm mesh). The resulting compositions in chip form were ground in an impact mill and sieved (75 micron mesh) to produce powder coating compositions each having a particle size distribution falling within the following range (determined using a Malvern Mastersizer X):
d(v)₉₉ = 68-76 microns
d(v)₅₀ = 20-24 microns
13-19% < 10 microns
0.75% by weight of an additive comprising alumina and aluminium hydroxide (45% : 55% by weight) was incorporated, by dry-blending, with each of the compositions.

The two powders were applied electrostatically to panels of the aerospace substrates listed below, and cured at 130°C for 30 minutes to form hard glossy coatings with film thicknesses of c.25-30µm.

### Substrates

(i) 2024 T3 alloy, bare, pre-treated with Alochrom 1200*
(ii) 2024 T3 alloy, clad, pre-treated with Alochrom 1200*
(iii) 2024 T3 alloy, bare, anodized
(iv) 7075 T6, bare, Alochrom 1200*
* A chromate-based chemical conversion coating applied to aluminium substrates, which converts the inert surface oxide layer into a thin surface layer of chromate-containing crystals to improve adhesion of the subsequent coating film to the substrate. Alochrom 1200 is applied as an aqueous solution and allowed to dry before overcoating.

The panels were tested according to Boeing specifications BMS 10-11 and BMS 10-72 Type V. Both coatings passed many of the specification requirements, e.g. wet and dry adhesion, fluid immersion, low and high temperature resistance. The coatings differed, however, in corrosion resistance (and also slightly in aesthetic appearance) and the corresponding results are shown below:

| Test | Substrate | Requirement | Coating results |
|---|---|---|---|
| **BMS 10-11V** | | | |
| Salt spray | (iv) | 3000 hrs, max 3mm | A: ≥ 4mm at 2000+ hrs- **FAIL** |
| | | | B: ≤ 1mm at 3000 hrs - **PASS** |

| **BMS 10-72V** | | | |
|---|---|---|---|
| Salt Spray | (iv) | 1000 hrs, max 3 mm | A: 2mm - PASS |
| | | | B: 0.5mm- comfortable PASS |
| Filiform corrosion | (ii) | 30 days, max 3mm | A: 3mm - **BORDERLINE** |
| | | | B: 1mm - **PASS** |

| **Both** | | | |
|---|---|---|---|
| Gloss (60° angle) | (i) | 90% minimum | A: 85% - FAIL |
| | | | B: 91% - PASS |

The films derived from coating composition B were also observed visually as having greater surface smoothness, or a reduced "orange peel" effect, compared with those derived from coating composition A.

As can be seen, the use of the inorganic inhibitor according to the invention leads to improved corrosion resistance and surface appearance even at relatively low film thicknesses, and accordingly permits the use of such thin-film powder coatings in applications with relatively demanding test specifications.

### Example 2

Low-bake epoxy powder coating compositions were prepared according to Example 1 above, composition A being included as a basis for comparison and composition B being in accordance with the invention. In addition, a further composition C was prepared, having the same composition as B except that 10% by weight of Albritect CC 300 was used instead of the Albritect CC 500. Albritect CC 300 (Albright & Wilson), is a blend of an insoluble aluminium silicate with an amorphous silica.

Each of the three powders was applied to replicate 6" x 4" bare 2024 T3 aerospace alloy panels, to film thicknesses of 40-50 µm, and cured for 30 min. at 130°C.

The panels were placed on corrosion test: hot neutral salt spray and filiform corrosion, tested respectively on separate panels, with scribes as per the test protocols. The panels were monitored and the extent of corrosion around the scribe noted at intervals:

| | **Salt spray** | | **Filiform** (max. filament length) |
|---|---|---|---|
| **Coating** | 1000 hours | 2500 hours | 1000 hours |
| A | -10 x 2mm blisters | 5mm blisters | 12mm |
| B | No blisters, dark scribe | 2mm | 3mm |
| C | No blisters, dark scribe | 2mm | 5mm |

It can be seen that both salt spray and filiform corrosion results were improved by the use of either CC300 or CC500 anti-corrosive pigment.

### Example 3

Low-bake epoxy powder coating compositions were prepared according to Example 1 above, composition A being included as a basis for comparison and composition B being in accordance with the invention. In addition, further compositions D, E and F were prepared, in accordance with the invention and containing varying levels of corrosion inhibitor as detailed below (parts by weight):

| | D | E | F |
|---|---|---|---|
| Rutile titanium dioxide | 20.41 | 20.41 | 20.41 |
| Pigment yellow 119 | 0.012 | 0.012 | 0.012 |
| Heucosin Fast blue | 0.484 | 0.484 | 0.484 |
| Lamp black 101 | 0.144 | 0.144 | 0.144 |
| Micronized dolomite | 6.32 | 6.32 | 6.32 |
| Barytes | 8.42 | 8.42 | 8.42 |
| Benzoin | 0.22 | 0.22 | 0.22 |
| Araldite epoxy resin | 56.30 | 54.40 | 52.50 |
| Epikure curing agent | 2.95 | 2.85 | 2.75 |
| Acrylic flow agent | 0.68 | 0.68 | 0.68 |
| Albritect CC500 | 4.00 | 6.00 | 8.00 |

In each case, the ingredients for the composition were dry-mixed in a blender, and fed into a twin-screw extruder operating at a temperature of 90°C. The extrudate was rolled flat on a chilled plate and broken into chip form (ca. 1 cm mesh).

The resulting compositions in chip form were ground in an impact mill and sieved (75µm mesh) to produce powder coating compositions, each having a particle size distribution falling within the range as given in Example 1.

Also as in Example 1, each of the compositions was blended with 0.75% by weight of an additive comprising alumina and aluminium hydroxide (45% : 55% by weight).

The powders were electrostatically spray applied to 1 mm thick aluminium alloy panels as detailed below, and stoved at 130°C for 30 minutes to form hard glossy coatings with film thicknesses between 30µm and 40µm.

### Substrates

(i) 2024 T3 alloy, bare, pre-treated by pickling in chromic acid *
(ii) 2024 T3 alloy, bare, pre-treated with Alochrom 1200
* Performed as a means of etching the surface of the substrate, in order to provide greater surface area for adhesion of the coating film.

The resulting coated panels were subjected to hot neutral salt spray testing as in Example 1 and in accordance with ASTM B.117/DIN 50021/BS 5466/ISO 3768. The number and size of corrosion blisters formed on each film was examined at the end of the test duration (1000 hours in each case). The corresponding results are shown below:

| Substrate | A | B | D | E | F |
|---|---|---|---|---|---|
| (i) | 5 x 5mm | <1mm | 20 x 1mm | 5 x 1mm | <1mm |
| (ii) | 2 x 1mm | <½ mm | <½ mm | <½ mm | <½ mm |

As can be seen, resistance to blistering after 1000 hours' salt spray is improved by the use of a corrosion inhibitor according to the invention, particularly in the case of substrate (i). For the latter substrate, the improvement increases with the proportion of inhibitor incorporated in the powder coating composition.

### Example 4

A low-bake epoxy powder coating composition G was formulated according to the invention, this time using an amine-accelerated curing agent based on bisphenol-A in place of the dicyandiamide crosslinker used in compositions A-F described above. The composition of G was as follows (parts by weight):

| | |
|---|---|
| Rutile titanium dioxide | 20.41 |
| Pigment yellow 119 | 0.012 |
| Heucosin Fast blue | 0.484 |
| Lamp black 101 | 0.144 |
| Micronized dolomite | 6.32 |
| Barytes | 8.42 |
| Benzoin | 0.22 |
| Araldite epoxy resin | 44.42 |
| Amine-accelerated phenolic curing agent | 8.89 |
| Acrylic flow agent | 0.68 |
| Albritect CC500 | 10.00 |

The ingredients of the composition were dry-mixed in a blender and fed into a twin-screw extruder operating at a temperature of 90°C. The extrudate was rolled flat on a chilled plate and broken into chip form (c. 1 cm mesh). The resulting composition in chip form was ground in an impact mill to produce a powder coating composition having a particle size distribution falling within the range given in Example 1. Also as in Example 1, the composition was blended with 0.75% by weight of an additive comprising alumina and aluminium hydroxide (45% : 55% by weight).

Composition G was applied electrostatically to panels of bare 2024-T3 alloy which had been pre-treated by pickling in chromic acid. The coatings were stoved for 30 minutes at 130°C to form hard, glossy films of thickness between 30 and 40µm. For comparison purposes, compositions A and B from Example 1 were similarly applied.

The three coated panels were tested using hot neutral salt spray as described in Example 3 above. In addition, each was subjected to a fluid resistance test of the type used in certain aerospace specifications. The test protocol comprised immersion in SKYDROL (tri-n-butyt phosphate) maintained at a temperature of (70 ±2)°C for 14 days, followed by a scratch resistance test according to European standard EN3840 T29. The results of these tests are shown below:

| Test | A | B | G |
|---|---|---|---|
| **Salt spray**: 1000 hrs (degree of blistering) | 5 x 5mm | <1mm | <½mm |
| Scratch resistance: max. weight before exposure of metal (following 14 days in Skydrol at 70°C) | 2000g | 1300g | 1900g |

As can be seen, each of compositions B and G according to the invention provided powder coatings having both superior corrosion resistance and also high levels of resistance to attack by aggressive fluids composition G being superior to B in the latter respect.

### Example 5: steel substrates

Epoxy-polyester hybrid powder coating compositions H and J were prepared with ingredients as follows (parts by weight):

| | H | J |
|---|---|---|
| Rutile titanium dioxide | 350 | 350 |
| Carboxy-functional polyester resin | 320 | 320 |
| Epoxy resin | 190 | 190 |
| Polyester-catalyst masterbatch | 28 | 28 |
| Polyvinyl flow agent | 2 | 2 |
| Benzoin | 3 | 3 |
| Wax | 6 | 6 |
| Calcium carbonate filler | 100 | 50 |
| Albritect CC500 | - | 50 |
| | 999 | 999 |

Powder coating composition J is in accordance with the invention, incorporating Albritect CC500 as corrosion-inhibiting additive. Composition H, which is essentially similar, but without the Albritect CC500, is included in order to provide a basis for comparison.

In each case, the ingredients were dry-mixed in a blender and fed into a twin-screw extruder operating at a temperature of 120°C. The extrudate was rolled flat on a chilled plate and broken into chip form (c. 1cm mesh). 0.1% by weight of alumina was added to the chip as a dry-flow additive to aid milling. The resulting compositions in chip form were ground in an impact mill to produce powder coating compositions having particle size distributions as follows:
d(v)₉₉ = 103-108 microns
d(v)₅₀ = 38-42 microns
7-8% < 10 microns

The resulting compositions were electrostatically spray applied to a 0.6mm thick substrate comprising electrogalvanised steel pre-treated with zinc phosphate. The powder coatings were cured at 190°C for 10 minutes to produce films of thickness 60-80µm.

The coated substrates were subjected to five cycles of a boil/peel-off test with each cycle as follows:
(a) cross-cut coating film 10x10 (1mm spacing) to produce a grid of 100 squares;
(b) immerse in boiling 5% NaCl solution for 8 hours;
(c) leave the test panel at room temperature for 16 hours; and
(d) perform tape-pull adhesion test on cross-cut area.

The results obtained were as follows:

| Test | H | J |
|---|---|---|
| **Adhesion after 5 cycles** (% of 100-square grid adhering) | 75% | 100% |
| **Surface levelling of film** (visual assessment) | good | excellent |

As can be seen, both the aesthetic finish of the film and its resistance to delamination in the boiling salt -water test were improved by the inclusion of Albritect CC500.

## Claims

1. A powder coating composition which comprises a film-forming polymer and a corrosion-inhibiting additive which comprises at least one silicate material selected from the group consisting of:
(a) materials obtainable by reaction of silica or a silicate with a compound of a trivalent metal; and
(b) naturally occurring or synthetic metal silicates,
and an oxide selected from zinc oxide, magnesium oxide, and silica, the oxide being present in an amount of 2 to 30% by weight, based on the total weight of the corrosion-inhibiting additive,
wherein the proportion of corrosion-inhibiting additive(s) incorporated before and/or during homogenisation of the composition is up to 15% by weight, based on the total weight of the composition, and wherein the proportion of corrosion-inhibiting additive(s) incorporated by post-blending is no more than 7.5% by weight, based on the total weight of the composition.

2. A powder coating composition as claimed in claim 1, wherein the said oxide is zinc oxide or amorphous silica.

3. A powder coating composition as claimed in claim 1 or claim 2, wherein the corrosion-inhibiting additive includes an amount of the oxide, preferably zinc oxide, in the range of from 2 to 25% by weight, based on the total weight of the corrosion-inhibiting additive, advantageously at least 5%, 10% or 15% by weight, more especially not exceeding 20%.

4. A powder coating composition as claimed in any one of claims 1 to 3, wherein the trivalent metal in embodiment (a) is chromium, iron or aluminium, especially aluminium.

5. A powder coating composition as claimed in any one of claims 1 to 3, wherein the silicate in embodiment (b) is a silicate of a trivalent metal, especially chromium, iron or aluminium, more especially aluminium.

6. A powder coating composition as claimed in any one of claims 1 to 4, in which the compound of a trivalent metal in embodiment (a) is a phosphate, fluoride, silicofluoride, chloride, sulphate or alkane carboxylate.

7. A powder coating composition as claimed in any one of claims 1 to 4 or 6, wherein the silica in embodiment (a) is amorphous silica or a precursor thereof.

8. A powder coating composition as claimed in any one of claims 1 to 7, wherein the corrosion-inhibiting additive, or a silica or silicate used in embodiment (a), is surface-modified by ion exchange.

9. A powder coating composition as claimed in claim 8, wherein the ions involved in the surface modification are selected from calcium, zinc, cobalt, lead, strontium, lithium, barium and magnesium, especially calcium.

10. A powder coating composition as claimed in claim 8 or claim 9, modified in that the corrosion-inhibiting additive comprises, or is derived from, silica or silicate which has been surface-modified as defined in those claims, in combination with zinc oxide.

11. A powder coating composition as claimed in any one of claims 1 to 10, wherein the ratio of silicon to metal atom is in the range of from 0.2 to 30 : 1, advantageously at least 0.5: 1, 1.5 : 1, 2.5: 1 or 3.5 : 1, preferably not exceeding 20: 1, 15: 1 or 10: 1.

12. A powder coating composition as claimed in any one of claims 1 to 11, wherein the proportion of corrosion-inhibiting additive(s) incorporated before and/or during homogenisation of the composition is in the range of from 1 to 15% by weight, based on the total weight of the composition.

13. A powder coating composition as claimed in any one of claims 1 to 11, wherein the proportion of corrosion-inhibiting additive(s) incorporated by post-blending is no more than 5% by weight.

14. A powder coating composition as claimed in any one of claims 1 to 13, wherein the total content of additive(s) incorporated by post-blending does not exceed 10% by weight, based on the weight of the composition without the additive(s).

15. A powder coating composition as claimed in any one of claims 1 to 14, wherein the particle size of the or each corrosion-inhibiting additive or component thereof is up to 25 microns, preferably no more than 10 microns, more especially from 2.5 to 7.5 microns.

16. A powder coating composition as claimed in any one of claims 1 to 15, wherein the particle size of any zinc oxide included in the corrosion inhibiting additive is in the range of from 0.1 to 10 microns.

17. A powder coating composition as claimed in any one of claims 1 to 16, which is a thermosetting system.

18. A powder coating composition as claimed in claim 17, which incorporates a film-forming polymer selected from carboxy-functional polyester-resins, hydroxy-functional polyester resins, epoxy resins, and functional acrylic resins.

19. A powder coating composition as claimed in any one of claims 1 to 18, which is convertible into continuous coating form (with curing as appropriate) at temperatures not exceeding 150°C, advantageously not exceeding 140°C and preferably not exceeding 130°C.

20. A process for forming a coating on a metal substrate, in which a composition as claimed in any one of claims 1 to 19 is applied to the substrate by a powder coating process resulting in particles of the composition adhering to the substrate, and forming the adherent particles into a continuous coating over at least part of the substrate.

21. A process as claimed in claim 20, wherein no further coating is applied to the coated substrate.

22. A process as claimed in claim 20 or 21, wherein the thickness of the applied coating is 50 microns or less, especially in the range of from 15 to 40 microns, more especially 30 microns or less.

23. A coated substrate obtained by a process as claimed in any one of claims 20-22.

24. A coated substrate as claimed in claim 23, wherein the substrate is aluminium or aluminium alloy.

## Patentansprüche

1. Pulverbeschichtungs-Zusammensetzung, umfassend ein filmbildendes Polymer und ein korrosionshemmendes Additiv, das wenigstens ein Silicatmaterial umfasst, das ausgewählt ist aus der Gruppe bestehend aus:
(a) Materialien, die durch eine Reaktion von Siliciumdioxid oder eines Silicats mit einer Verbindung eines dreiwertigen Metalls erhältlich sind, und
(b) natürlich vorkommenden oder synthetischen Metallsilicaten,
und einem aus Zinkoxid, Magnesiumoxid und Siliciumdioxid ausgewählten Oxid, wobei das Oxid in einer Menge von 2 bis 30 Gew.-%, bezogen auf das Gesamtgewicht des korrosionshemmenden Additivs, vorhanden ist,
wobei der Anteil des (der) vor und/oder während der Homogenisierung der Zusammensetzung eingearbeiteten korrosionshemmenden Additivs (Additive) bis zu 15 Gew.-%, bezogen auf das Gesamtgewicht der Zusammensetzung, beträgt, und wobei der Anteil des (der) durch nachträgliches Vermischen eingearbeiteten korrosionshemmenden Additivs (Additive) nicht mehr als 7,5 Gew.-%, bezogen auf das Gesamtgewicht der Zusammensetzung, beträgt.

2. Pulverbeschichtungs-Zusammensetzung nach Anspruch 1, wobei das Oxid Zinkoxid oder amorphes Siliciumdioxid ist.

3. Pulverbeschichtungs-Zusammensetzung nach Anspruch 1 oder Anspruch 2, wobei das korrosionshemmende Additiv eine Menge des Oxids, vorzugsweise Zinkoxid, im Bereich von 2 bis 25 Gew.-%, bezogen auf das Gesamtgewicht des korrosionshemmenden Additivs, vorteilhaft wenigstens 5 Gew.-%, 10 Gew.-% oder 15 Gew.-%, ganz besonders nicht mehr als 20 Gew.-%, einschließt.

4. Pulverbeschichtungs-Zusammensetzung nach einem der Ansprüche 1 bis 3, wobei das dreiwertige Metall in Ausführungsform (a) Chrom, Eisen oder Aluminium, insbesondere Aluminium ist.

5. Pulverbeschichtungs-Zusammensetzung nach einem der Ansprüche 1 bis 3, wobei das Silicat in Ausführungsform (b) ein Silicat eines dreiwertigen Metalls, insbesondere von Chrom, Eisen oder Aluminium, insbesondere Aluminium ist.

6. Pulverbeschichtungs-Zusammensetzung nach einem der Ansprüche 1 bis 4, wobei die Verbindung eines dreiwertigen Metalls in Ausführungsform (a) ein Phosphat, Fluorid, Silicofluorid, Chlorid, Sulfat oder Alkancarboxylat ist.

7. Pulverbeschichtungs-Zusammensetzung nach einem der Ansprüche 1 bis 4 oder 6, wobei das Siliciumdioxid in Ausführungsform (a) amorphes Siliciumdioxid oder eine Vorstufe davon ist.

8. Pulverbeschichtungs-Zusammensetzung nach einem der Ansprüche 1 bis 7, wobei das korrosionshemmende Additiv oder das in Ausführungsform (a) verwendete Siliciumdioxid oder Silicat durch einen Ionenaustausch oberflächenmodifiziert ist.

9. Pulverbeschichtungs-Zusammensetzung nach Anspruch 8, wobei die in die Oberflächenmodifikation einbezogenen Ionen aus Calcium, Zink, Kobalt, Blei, Strontium, Lithium, Barium und Magnesium, insbesondere Calcium, ausgewählt sind.

10. Pulverbeschichtungs-Zusammensetzung nach Anspruch 8 oder Anspruch 9, dahingehend modifiziert, dass das korrosionshemmende Additiv in Kombination mit Zinkoxid Siliciumdioxid oder ein Silicat, das gemäß der Definition in diesen Ansprüchen oberflächenmodifiziert wurde, umfasst oder davon stammt.

11. Pulverbeschichtungs-Zusammensetzung nach einem der Ansprüche 1 bis 10, wobei das Verhältnis von Silicium zu Metallatomen im Bereich von 0,2 bis 30:1 liegt, vorteilhaft wenigstens 0,5:1, 1,5:1, 2,5:1 oder 3,5:1 beträgt und vorzugsweise nicht 20:1, 15:1 oder 10:1 übersteigt.

12. Pulverbeschichtungs-Zusammensetzung nach einem der Ansprüche 1 bis 11, wobei der Anteil des (der) korrosionshemmenden Additivs (Additive), das (die) vor und/oder während der Homogenisierung der Zusammensetzung eingearbeitet wird (werden), im Bereich von 1 bis 15 Gew.-%, bezogen auf das Gesamtgewicht der Zusammensetzung, liegt.

13. Pulverbeschichtungs-Zusammensetzung nach einem der Ansprüche 1 bis 11, wobei der Anteil des (der) korrosionshemmenden Additivs (Additive), das (die) durch nachträgliches Mischen eingearbeitet wird (werden), nicht mehr als 5 Gew.-% beträgt.

14. Pulverbeschichtungs-Zusammensetzung nach einem der Ansprüche 1 bis 13, wobei der Gesamtgehalt an Additiv(en), das (die) durch nachträgliches Mischen eingearbeitet wird (werden), 10 Gew.-%, bezogen auf das Gewicht der Zusammensetzung ohne das Additiv (die Additive), nicht übersteigt.

15. Pulverbeschichtungs-Zusammensetzung nach einem der Ansprüche 1 bis 14, wobei die Teilchengröße des oder eines jeden korrosionshemmenden Additivs oder einer Komponente davon bis zu 25 µm, vorzugsweise nicht mehr als 10 µm, ganz besonders 2,5 bis 7,5 µm beträgt.

16. Pulverbeschichtungs-Zusammensetzung nach einem der Ansprüche 1 bis 15, wobei die Teilchengröße eines in das korrosionshemmende Additiv eingearbeiteten Zinkoxids im Bereich von 0,1 bis 10 µm liegt.

17. Pulverbeschichtungs-Zusammensetzung nach einem der Ansprüche 1 bis 16, die ein warmhärtendes System ist.

18. Pulverbeschichtungs-Zusammensetzung nach Anspruch 17, die ein filmbildendes Polymer einschließt, das aus carboxyfunktionellen Polyesterharzen, hydroxyfunktionellen Polyesterharzen, Epoxyharzen und funktionellen Acrylharzen ausgewählt ist.

19. Pulverbeschichtungs-Zusammensetzung nach einem der Ansprüche 1 bis 18, die bei Temperaturen, die 150 °C nicht übersteigen, vorzugsweise 140 °C nicht übersteigen und vorzugsweise 130 °C nicht übersteigen, in die Form einer kontinuierlichen Beschichtung (bei Bedarf unter Härtung) umwandelbar ist.

20. Verfahren zur Bildung einer Beschichtung auf einem Metallsubstrat, wobei eine in einem der Ansprüche 1 bis 19 beanspruchte Zusammensetzung durch ein Pulverbeschichtungsverfahren auf das Substrat aufgetragen wird, was dazu führt, dass Teilchen der Zusammensetzung am Substrat haften, und auf wenigstens einem Teil des Substrats die anhaftenden Teilchen zu einer kontinuierlichen Beschichtung geformt werden.

21. Verfahren nach Anspruch 20, wobei keine weitere Beschichtung auf das beschichtete Substrat aufgetragen wird.

22. Verfahren nach Anspruch 20 oder 21, wobei die Dicke der aufgetragenen Beschichtung 50 µm oder weniger beträgt, insbesondere im Bereich von 15 bis 40 µm liegt und ganz besonders 30 µm oder weniger beträgt.

23. Beschichtetes Substrat, erhalten durch ein Verfahren nach einem der Ansprüche 20 - 22.

24. Beschichtetes Substrat nach Anspruch 23, wobei das Substrat Aluminium oder eine Aluminiumlegierung ist.

## Revendications

1. Composition de revêtement en poudre qui comprend un polymère filmogène et un additif inhibiteur de corrosion qui comprend au moins un matériau silicate choisi dans le groupe constitué par :
(a) les matériaux pouvant être obtenus par réaction de silice ou d'un silicate avec un composé d'un métal trivalent ; et
(b) les silicates métalliques naturels ou synthétiques,
et un oxyde choisi parmi l'oxyde de zinc, l'oxyde de magnésium, et la silice, l'oxyde étant présent en une quantité de 2 à 30 % en poids, par rapport au poids total de l'additif inhibiteur de corrosion,
dans laquelle la proportion du ou des additifs inhibiteurs de corrosion incorporés avant et/ou durant l'homogénéisation de la composition va jusqu'à 15 % en poids, par rapport au poids total de la composition, et dans laquelle la proportion du ou des additifs inhibiteurs de corrosion incorporés par post-combinaison ne dépasse pas 7,5 % en poids par rapport au poids total de la composition.

2. Composition de revêtement en poudre selon la revendication 1, dans laquelle ledit oxyde est l'oxyde de zinc ou la silice amorphe.

3. Composition de revêtement en poudre selon la revendication 1 ou la revendication 2, dans laquelle l'additif inhibiteur de corrosion comprend une quantité de l'oxyde, de préférence l'oxyde de zinc, située dans la plage allant de 2 à 25 % en poids, par rapport au poids total de l'additif inhibiteur de corrosion, avantageusement d'au moins 5 %, 10 % ou 15 % en poids, mieux encore ne dépassant pas 20 %.

4. Composition de revêtement en poudre selon l'une quelconque des revendications 1 à 3, dans laquelle le métal trivalent du mode de réalisation (a) est le chrome, le fer ou l'aluminium, en particulier l'aluminium.

5. Composition de revêtement en poudre selon l'une quelconque des revendications 1 à 3, dans laquelle le silicate du mode de réalisation (b) est un silicate d'un métal trivalent, en particulier de chrome, de fer ou d'aluminium, plus particulièrement d'aluminium.

6. Composition de revêtement en poudre selon l'une quelconque des revendications 1 à 4, dans laquelle le composé d'un métal trivalent dans le mode de réalisation (a) est un phosphate, fluorure, silicofluorure, chlorure, sulfate, ou alcanecarboxylate.

7. Composition de revêtement en poudre selon l'une quelconque des revendications 1 à 4 ou 6, dans laquelle la silice du mode de réalisation (a) est une silice amorphe ou un précurseur de celle-ci.

8. Composition de revêtement en poudre selon l'une quelconque des revendications 1 à 7, dans laquelle l'additif inhibiteur de corrosion, ou une silice ou un silicate utilisé dans le mode de réalisation (a), est modifié en surface par échange d'ions.

9. Composition de revêtement en poudre selon la revendication 8, dans laquelle les ions impliqués dans la modification de surface sont choisis parmi les ions calcium, zinc, cobalt, plomb, strontium, lithium, baryum et magnésium, en particulier calcium.

10. Composition de revêtement en poudre selon la revendication 8 ou la revendication 9, modifiée en ce que l'additif inhibiteur de corrosion comprend de la silice ou un silicate, qui a été modifié en surface comme défini dans ces revendications, ou dérive de celui-ci, en combinaison avec de l'oxyde de zinc.

11. Composition de revêtement en poudre selon l'une quelconque des revendications 1 à 10, dans laquelle le rapport atomique du silicium au métal est situé dans la plage allant de 0,2 à 30/1, est avantageusement d'au moins 0,5/1, 1,5/1, 2,5/1 ou 3,5/1, et de préférence ne dépasse pas 20/1, 15/1 ou 10/1.

12. Composition de revêtement en poudre selon l'une quelconque des revendications 1 à 11, dans laquelle la proportion du ou des additifs inhibiteurs de corrosion incorporés avant et/ou durant l'homogénéisation de la composition est située dans la plage allant de 1 à 15 % en poids par rapport au poids total de la composition.

13. Composition de revêtement en poudre selon l'une quelconque des revendications 1 à 11, dans laquelle la proportion du ou des additifs inhibiteurs de corrosion incorporés par post-combinaison ne dépasse pas 5 % en poids.

14. Composition de revêtement en poudre selon l'une quelconque des revendications 1 à 13, dans laquelle la teneur totale en additif(s) incorporé(s) par post-combinaison ne dépasse pas 10 % en poids par rapport au poids de la composition sans le ou les additifs.

15. Composition de revêtement en poudre selon l'une quelconque des revendications 1 à 14, dans laquelle la granulométrie de chaque additif inhibiteur de corrosion ou composant de celui-ci va jusqu'à 25 micromètres, de préférence ne dépasse pas 10 micromètres, mieux encore va de 2,5 à 7,5 micromètres.

16. Composition de revêtement en poudre selon l'une quelconque des revendications 1 à 15, dans laquelle la granulométrie d'un quelconque oxyde de zinc incorporé dans l'additif inhibiteur de corrosion est située dans la plage allant de 0,1 à 10 micromètres.

17. Composition de revêtement en poudre selon l'une quelconque des revendications 1 à 16, qui est un système thermodurcissable.

18. Composition de revêtement en poudre selon la revendication 17, qui incorpore un polymère filmogène choisi parmi les résines de polyester à fonctionnalité carboxy, les résines de polyester à fonctionnalité hydroxy, les résines époxy, et les résines acryliques fonctionnelles.

19. Composition de revêtement en poudre selon l'une quelconque des revendications 1 à 18, qui est convertible en une forme de revêtement en continu (avec durcissement selon les besoins) à des températures ne dépassant pas 150°C, avantageusement ne dépassant pas 140°C et de préférence ne dépassant pas 130°C.

20. Procédé pour former un revêtement sur un substrat métallique, dans lequel une composition telle que revendiquée dans l'une quelconque des revendications 1 à 19 est appliquée sur le substrat par un procédé de revêtement en poudre ayant pour résultat que des particules de la composition adhèrent au substrat, et les particules adhérentes forment un revêtement continu sur au moins une partie du substrat.

21. Procédé selon la revendication 20, dans lequel on n'applique pas de revêtement supplémentaire sur le substrat revêtu.

22. Procédé selon la revendication 20 ou 21, dans lequel l'épaisseur du revêtement appliqué est de 50 micromètres ou moins, en particulier située dans la plage allant de 15 à 40 micromètres, plus particulièrement de 30 micromètres ou moins.

23. Substrat revêtu obtenu par un procédé tel que revendiqué dans l'une quelconque des revendications 20 à 22.

24. Substrat revêtu selon la revendication 23, dans lequel le substrat est en aluminium ou en alliage d'aluminium.
